(19) Europäisches Patentamt
European Patent Office
Office européen des brevets

(11) EP 0 560 326 B1

(12) **EUROPEAN PATENT SPECIFICATION**

(45) Date of publication and mention of the grant of the patent:
**28.05.1997 Bulletin 1997/22**

(51) Int Cl.[6]: **C08F 297/08**, C08L 23/16, C09J 123/16, C08L 53/00

(21) Application number: **93103846.7**

(22) Date of filing: **10.03.1993**

(54) **Compositions of random copolymers of propene containing an alpha-olefin as comonomer**

Zusammensetzungen von statischen Propen-Copolymeren mit Alpha-Olefincomonomeren

Compositions de copolymères statistiques de propène et comonomères d'alpha-olefines

(84) Designated Contracting States:
**AT BE DE ES FR GB IT NL PT SE**

(30) Priority: **10.03.1992 IT MI920545**

(43) Date of publication of application:
**15.09.1993 Bulletin 1993/37**

(73) Proprietor: **MONTELL NORTH AMERICA INC.**
**New Castle County Delaware (US)**

(72) Inventors:
- **Cecchin, Giuliano**
  **I-44100 Ferrara (IT)**
- **Guglielmi, Floriano**
  **I-44100 Ferrara (IT)**

(74) Representative: **Zumstein, Fritz, Dr. et al**
**Patentanwälte,**
**Dr. F. Zumstein,**
**Dipl.-Ing. F. Klingseisen,**
**Bräuhausstrasse 4**
**80331 München (DE)**

(56) References cited:
**EP-A- 0 037 291**
**EP-A- 0 263 718**
**EP-A- 0 442 316**
**FR-A- 2 314 211**
**US-A- 4 211 852**

- **DATABASE WPIL Derwent Publications Ltd., London, GB; AN 82-16332E**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a composition of random copolymers of propene comprising one or more $C_4$-$C_{10}$ $\alpha$-olefins as comonomer, and to a process to obtain said composition.

The copolymer composition according to the present invention is suitable for the production of heat-sealable film that can be used as such thanks to their mechanical and physical properties, or in the preparation of multilayer films obtained, for example, by way of coextrusion with polypropylene. Moreover, said composition can also be used in the food industry because of their low content of component soluble in xylene at room temperature.

The use of compositions of copolymers of propene with an olefin, mainly ethylene and/or 1-butene, or their blends with other olefin polymers, for the preparation of heat-sealable materials is known in the art.

US-A-4,481,336 describes compositions made up of two propene/ethylene and/or butene copolymer fractions, said compositions having heat-sealable, clarity, and nonsticking properties. Said patent teaches that the butene content in the copolymeric fraction present in lower quantities must be greater than 25% by weight with respect to the total monomers, and the quantity of propene must be less than 75% by weight. If said quantities are not adhered to as regards respectively the lower and upper limits, the composition obtained would have poor heat sealability. Moreover, the film obtained by using said compositions should not be oriented, otherwise the portion of the film subjected to sealing could shrink during the heat-sealing process.

US-A-4,822,840 describes copolymer compositions comprising propene/ethylene/$\alpha$-olefins random copolymers. The propene is the principal component, and the ethylene is present in quantities ranging from 0.2 to 3.5% by weight.

EP-A-0 483 523 concerns a composition comprising a copolymer of propene with an $\alpha$-olefin, and, preferably, an ethylene/propene copolymer as the second copolymer.

EP-A-0 263 718 discloses a low-crystalline propylene polymer composition having improved heat sealability and suitable for producing films and composite laminated structures, e.g. for use in food packaging. Said composition is prepared by a sequential polymerization process carried out in two stages and comprises:

(I) 60-95% by weight of a propylene random copolymer composed of units derived from propylene, ethylene and butene, and

(II) 5-40% by weight of a low-crystalline random copolymer composed of units derived from propylene and butene.

However, the compositions known up to now have characteristics which are not adequate for some of the uses for which said compositions are destined. The disadvantages of said compositions are due to a heat-seal temperature which is not sufficiently low, a solubility in xylene at 25°C which is too high, and a low crystallinity.

It is well known to those of ordinary skill in the art that in order to obtain compositions with a low heat-sealing temperature, they must also have a low melting point.

A new composition has now been found having low solubility in xylene and lower heat-sealing temperature, but a high melting point.

A particular advantage of the copolymer composition of the present invention is that it is particularly useful for the production of laminated mono- or bioriented films having a low heat-sealing temperature.

A further advantage of the copolymer compositions of the present invention is their rigidity. Said compositions are much more rigid compared to the compositions known in the art.

Object of the present invention is a semicrystalline polyolefin composition comprising (by weight):

A) 25-50 % of a propene/$C_4$-$C_{10}$ $\alpha$-olefin random copolymer (Fraction A), containing from 1 to 10% of a $C_4$-$C_{10}$ $\alpha$-olefin,
B) 50-75% of a propene/$C_4$-$C_{10}$ $\alpha$-olefin random copolymer (Fraction B), containing from 15 to 40% of a $C_4$-$C_{10}$ $\alpha$-olefin, same or different from the one present in Fraction A,

wherein the percent by weight of Fraction B (%B), referred to the total composition, and the percent by weight of $C_4$-$C_{10}$ $\alpha$-olefin in Fraction B ($C_4^B$) satisfy the relation $\%B \times C_4^B \geq 1200$, the amount of fraction soluble in xylene at 25°C is less than 16% by weight, the melting point is from 135 to 150°C and the heat sealing temperature is 90 to 105°C.

The preferred $C_4$-$C_{10}$ $\alpha$-olefins are 1-butene, 1-pentene, 1-hexene, 1-octene, and 4-methyl-1-pentene. Particularly preferred is 1-butene. Preferably the $C_4$-$C_{10}$ $\alpha$-olefins of Fractions A and B are the same.

The preferred percent of $C_4$-$C_{10}$ $\alpha$-olefins in Fraction A is from 3 to 8% by weight, while in Fraction B the preferred percent is from 20 to 30% by weight.

The properties of the composition of the invention are as follows:
melting point: from 135° to 150°C; fraction soluble in xylene at 25°C: less than 16%; flexural modulus: higher than 700 MPa; heat sealing temperature: from 90° to 105°C.

The composition of the invention is preferably prepared by way of sequential polymerization of the monomers in the presence of Ziegler-Natta stereospecific catalysts ,supported on magnesium dihalides in active form. Said catalysts contain, as an essential element, a solid catalyst component comprising a titanium compound having at least one titanium-halogen bond, and an electron-donor compound, both supported on magnesium dihalides in active form. The magnesium dihalide support is present preferably in the form of spheroidal particles having a narrow particle size distribution.

The catalysts used in the process of the invention are characterized by the fact that they are capable of producing polypropylene having an isotactic index higher than 90, preferably higher than 95. Catalysts which have the above mentioned characteristics are well known in patent literature. Particularly useful are the catalysts described in US-A-4,339,054, and EP-B-0 045 977. Other examples of suitable catalysts are described in US-A-4,472,524 and US-A-4,473,660.

The solid catalyst components used in the preparation of said catalysts contain, as electron-donor, compounds selected from ethers, ketones, lactones, compounds containing N, P, and/or S atoms, and esters of mono- and dicarboxylic acids. Particularly suitable are the esters of phthalic acid, such as diisobutyl, dioctyl, and diphenyl phthalate, and monobutyl monobenzyl phthalate; the esters of malonic acid, such as diisobutyl and diethyl malonate; the aryl and alkyl pivalates; the alkyl, cycloalkyl and aryl maleates; the alkyl and aryl, carbonates, such as diisobutyl carbonate, monoethyl monophenyl carbonate, and diphenyl carbonate; the esters of succinic acid, such as mono- and diethyl succinate. Other particularly suitable electron-donors are the 1,3-diethers of formula (I)

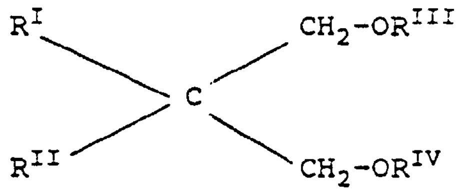

where $R^{I}$ and $R^{II}$, are the same or different, and are $C_1$-$C_{18}$ alkyl, $C_3$-$C_{18}$ cycloalkyl, or $C_6$-$C_{18}$ aryl radicals; $R^{III}$ and $R^{IV}$, are the same or different, and are alkyl radicals having from 1 to 4 carbon atoms.

The ethers of the type described are illustrated in European patent application no. 361,493.

Examples representative of the ethers of formula (I) are 2-methyl-2-isopropyl-1,3-dimethoxypropane, 2,2-diisobutyl-1,3-dimethoxypropane, and 2-isopropyl-2-cyclopentyl-1,3-dimethoxypropane.

The catalyst components illustrated are prepared according to various methods. One of them consists of milling or co-milling the magnesium dihalide (anhydrous, containing less than 1% of water) with the titanium compound and the electron-donor compound, under conditions which cause the activation of the magnesium dihalide; thereafter, the milled product is treated one or more times with an excess of $TiCl_4$ at a temperature ranging from 80° to 135°C, and then washed repeatedly with a hydrocarbon (hexane, for example) until no more chlorine ions can be found in the wash water.

According to another method, the anhydrous magnesium dihalide is first preactivated using known methods, then it is reacted with an excess of $TiCl_4$ containing the electron-donor compound in solution. The operation takes place at a temperature ranging from 80° to 135°C. Optionally the treatment with $TiCl_4$ can be repeated. The solid is then washed with hexane, or other hydrocarbon solvents, in order to eliminate all traces of nonreacted $TiCl_4$.

Another method is based on the reaction between a $MgCl_2 \cdot nROH$ adduct (particularly in spheroidal particle form), where n is generally a number from 1 to 3 and ROH is ethanol, butanol, or isobutanol, and an excess of $TiCl_4$ containing the electron-donor compound in solution. The reaction temperature generally ranges from 80 to 120°C. The solid is then separated and caused to react one or more times with $TiCl_4$, then washed with a hydrocarbon solvent in order to eliminate all traces of nonreacted $TiCl_4$. An alternative method consists of reacting the magnesium alcoholates and chloro-alcoholates (the latter prepared in particular according to the method described in U.S. patent no. 4,220,554), with an excess of $TiCl_4$ containing the electron-donor compound in solution, operating under the same reaction conditions described above.

Generally, the titanium compound in the solid catalyst component, expressed as Ti content, is present from 0.5 to 10% by weight, and the quantity of electron-donor compound which remains fixed on the solid component (internal donor), generally ranges from 5 to 20% in moles with respect to the magnesium dihalide.

The titanium compounds which can be used for the preparation of the solid catalyst component (a) are the titanium halides and the halo-alcoholates. Titanium tetrachloride is the preferred compound.

Satisfactory results can be obtained also with titanium trihalides, particularly $TiCl_3HR$, $TiCl_3ARA$, and titanium haloalcoholates, such as $TiCl_3OR$, where R is a phenyl radical.

The reactions indicated above bring to the formation of magnesium dihalide in active form. Besides these reactions,

other reactions are known in the art which cause the formation of activated magnesium halide starting from magnesium compounds different from the magnesium halides, such as carboxylates of magnesium, for example.

The active form of the magnesium dihalides in the solid catalyst components is revealed by the fact that in the X-ray spectrum of the catalyst component the major intensity reflection shows a half-peak breadth at least 30% greater than the one of the major intensity reflection which appears in the unactivated Mg dihalide spectrum, or by the fact that the major intensity reflection, which appears in the spectrum of the unactivated magnesium dihalide (having a surface area smaller than 3 $m^2/g$), is no longer present, but in its place there is a halo with the intensity maximum shifted respect to the position of the major intensity reflection of the unactivated magnesium dihalide.

The most active forms are those where the above mentioned halo appears in the X-ray spectrum.

Among the magnesium halides, the chloride is the preferred compound. In the case of the most active forms of magnesium chloride, the X-ray spectrum of the catalyst component shows a halo instead of the reflection which in the spectrum of the unactivated magnesium chloride appears at a distance of 2.56 Å.

The Al-alkyl compounds used as co-catalysts are of the trialkyl aluminum type, such as Al-triethyl, Al-triisobutyl, Al-tri-n-butyl, and linear or cyclic Al-alkyl compounds containing two or more Al atoms bonded by way of O or N atoms, or $SO_2$, $SO_3$ and $SO_4$ groups.

Some examples of these compounds are:

$(C_2H_5)_2Al\text{-}O\text{-}Al(C_2H_5)_2$,

$(C_2H_5)_2Al\text{-}N(C_6H_5)\text{-}Al(C_2H_5)_2$,

$(C_2H_5)_2Al\text{-}SO_2\text{-}Al(C_2H_5)_2$,

$CH_3[(CH_3)Al\text{-}O]_n\text{-}Al(CH_3)_2$,

$-[(CH_3)Al\text{-}O]_n-$,

where n is a number from 1 to 20.

One can also use $AlR_2H$ compounds, and $AlR_2OR'$ compounds, where R is an alkyl radical having from 1 to 6 carbon-atoms, and R' represents an aryl radical substituted in one or more positions.

The Al-alkyl compound is generally present in such quantities that the Al/Ti ratio ranges from 1 to 1000.

The electron-donor compounds which can be used as external donors (added together with the Al-alkyl compound) comprise the esters of aromatic acids (such as alkyl benzoates), heterocyclic compounds (such as 2,2,6,6-tetramethylpiperidine, and 2,6-diisopropylpiperidine) and particularly silicon compounds containing at least one Si-OR bond (where R is a hydrocarbon radical). Some examples of silicon compounds are: $(t\text{-}C_4H_9)_2Si(OCH_3)_2$, $(C_6H_{11})_2Si(OCH_3)_2$, and $(C_6H_5)_2Si(OCH_3)_2$. The 1,3-diethers of formula (I) can also be used advantageously as external donors. In the case where the internal donor is one of the 1,3-diethers of formula (I) the external donor can be omitted.

The polymerization is carried out in at least two stages, during which Fractions A and B of the present invention are prepared. The fractions are formed in separate and in sequential stages. In each stage the operation takes place in the presence of the polymer obtained and the catalyst used in the preceding stage. The order in which Fractions A and B are prepared is not important, however, it is preferred to prepare first Fraction A and then Fraction B.

The polymerization process can be carried out in liquid phase, in the presence or absence of inert solvent, or in gas phase, or using mixed liquid and gas phases. The preferred process is the one which is carried out in gas phase.

The length and temperatures of polymerization during the polymerization stages are not critical; at any rate the preferred temperature range is from 20° to 100°C.

The regulation of the molecular weight is done by using known regulators, preferably hydrogen.

The polymerization process can be preceded by a prepolymerization process where the catalyst is caused to contact with small quantities of olefins.

The following examples illustrate, but do not limit, the methods of preparation and the characteristics of the composition of the present invention.

## Preparation of the solid catalyst component

The solid catalyst component used is prepared from a $MgCl_2{\cdot}3C_2H_5OH$ adduct produced as follows: in inert atmosphere one introduces in a flask immersed in a bath with the temperature maintained at 120ºC, under agitation, 28.4 g of anhydrous $MgCl_2$, 49.5 g of pure anhydrous ethanol, 100 ml of ROL OB/30 vaseline oil, 100 ml of silicon oil (viscosity = 350 cs), until the $MgCl_2$ is dissolved. Thus the $MgCl_2$ adduct with ethanol in a mixture with the oils is formed. The hot reaction mix is then transferred in an inert atmosphere to a 1500 ml vessel equipped with heating jacket, containing 150 ml of vaseline oil and 150 ml of silicon oil. The mixture is maintained at 120°C while the contents are stirred by way of an Ultra Turrax T-45 N agitator of the Janke & Kunkel K.G. Ika Werke. The stirring continues for 3 minutes at 3000 rpm. The mixture is then discharged into a 2 liter vessel containing 1000 ml of anhydrous n-heptane, kept under agitation and cooled in such a way that the temperature does not exceed 0°C. The microspheres of $MgCl_2{\cdot}3C_2H_5OH$ thus obtained are recovered by filtration and dried under vacuum at room temperature. The resulting adduct is then dealcoholated by gradually increasing the temperature from 50° to 100°C under nitrogen flow until the

alcohol content goes down to 1.5 moles per mole of $MgCl_2$. The partially dealcoholated adduct has a surface area of 9.1 $m^2/g$ and an apparent density of 0.564 $g/cm^3$.

25 g of said adduct are added to 625 ml of $TiCl_4$ while under agitation at 0°C. It is then heated to 100°C in one hour. When the temperature reaches 40°C one adds diisobutyl phthalate in a magnesium/diisobutylphthalate molar ratio equal to 8.

The contents of the reactor are heated to 100°C for two hours, then the solids are allowed to settle, and the hot liquid is syphoned off. The solid is washed six times using 200 ml of anhydrous hexane at 60°C, and finally three times at room temperature. The solid, after having been dried under vacuum, has the following characteristics:

- porosity: 0.261 $cm^3/g$,
- surface area: 66.5 $m^2/g$,
- bulk density: 0.55 $g/cm^3$.

Examples 1, 2, 3, 4, and comparative examples 1c and 2c General operating methods

The polymerization tests have been carried out in a 22 liter stainless steel autoclave equipped with magnetic helical agitator rotating at about 90 rpm.

The gas phase is analyzed in continuous by way of a process gas-chromatograph in order to determine the concentration of l-butene, propylene and hydrogen. During the polymerization, the l-butene, propylene, and hydrogen are fed using flow-meter regulators in order to maintain a constant concentration in the gas phase.
The reaction is carried out at constant temperature and pressure, unless otherwise specified.

The batch operation is conducted in two stages, both in gas phase: during the first stage one carries out the copolymerization of the propylene with the 1-butene to obtain fraction A, during the second stage one carries out the polymerization of the same comonomers to obtain fraction B.

1st stage: at room temperature one introduces in the autoclave in order: a) the proper quantities of propylene, 1-butene, and hydrogen in order to obtain the desired composition of the gas phase and the desired pressure; b) the catalyst system consisting of a solid component (about 1 g), prepared as described above, and of a blend comprising 25 ml of a 25% triethylaluminum (TEAL) solution in hexane and a quantity of dicyclopentyldimethoxysilane (DCPMS) that brings the TEAL/DCPMS molar ratio to 8. The catalyst system is injected into the reactor by way of propylene pressure. The temperature is then brought to operating level (in about 10 minutes) and the reaction continues for the desired time. The residual monomers are eliminated by degassing at 60°C at atmospheric pressure, and a sample of the copolymer is taken from a discharge valve situated at the bottom of the autoclave and sent to be analyzed. The operation lasts about 10 minutes.

2nd stage: one reintroduces in the reactor in order the propylene, 1-butene, and hydrogen in the ratio and quantities needed to obtain the desired composition and pressure of the gas phase, and then the reaction is continued for the proper length of time, which varies according to the reactivity of the catalyst system and the percent of fraction B desired.

At the end of the polymerization test the polymer is discharged from the bottom of the autoclave, stabilized with pentaerythrityl tetrakis[3-(3,5-di-tert-butyl-4-hydroxyphenyl)propanoate] (0.2% by weight), and 2,6-di-tert-butyl-para-cresol (BHT) (0.2% by weight), and dried in an oven under nitrogen flow at 60°C.

The percent by weight of Fractions A and B (%A and %B respectively) with respect to the final composition, the percent by weight of the butene contained in Fraction B ($C_4^B$), and the intrinsic viscosity of Fraction B ($I.V.^B$) have been calculated by using the following formulas:

$$\%A = Cl_F/Cl_A,$$

$$C_4^B = [C_4^F - (\%A \bullet C_4^A/100)] \bullet 100/\%B,$$

$$I.V.^B = [I.V.^F - (\%A \bullet I.V.^A/100)] \bullet 100/\%B,$$

where:

- $Cl_F$ and $Cl_A$ represent, respectively, the chlorine content (from the catalytic residues) of the final composition and

of fraction A;

- $C_4^F$ and $C_4^A$ represent, respectively, the percent by weight of butene contained in the final composition and in fraction A;
- $I.V.^F$ and $I.V.^A$ represent, respectively, the intrinsic viscosity of the final composition and fraction A.

All the tests which have been conducted and relative operating conditions are set forth in Tables 1 and 2, while in Table 3 are shown the data regarding the polymerization yield and characteristics of the final compositions.

The following analytical methods have been used to characterize the compositions of the examples:

- l-butene content: determined by IR spectroscopy;
- melting point: determined by DSC;
- fraction soluble in xylene: determined by solubilizing a sample of the material in xylene at 125°C, then cooling it to room temperature. The soluble and insoluble fractions are separated by filtration;
- melt index: determined according to method ASTM D 1238, condition L;
- Intrinsic viscosity: determined in tetrahydronaphthalene at 135°C;
- haze: determined according method ASTM D 1003 on lmm thick specimens;
- seal initiation temperature: determined by preparing 50 µm thick films by extruding the compositions of the examples at about 200°C. Each film thus obtained is laid over a film of polypropylene having an isotactic index of 97 (in boiling n-heptane), melt index of 4.5 g/10 minutes, said film having thickness of 560 µm. The overlapped films are bonded in a plate-press at 200°C with a load of 9000 Kg. Said load is maintained for 5 minutes. The resulting bonded films are then been stretched to six times their length and width using a TM LONG film stretcher, thus obtaining films of a thickness of about 20 µm. 5x10 cm. specimens are obtained from said films. The sealing values are obtained by applying a 200 g load to heat-sealed samples. For each measurement two of the above specimens are overlapped with the heat-sealable layers, made up of the compositions of the examples, touching each other. Said overlapped specimens are then sealed along the 5 cm. side using a XENTINEL combination laboratory sealer model 12-12 AS. The sealing time is 5 seconds, the pressure 1.2 atm and the width of the seals 2.5 cm. The sealing temperature is increased by 2°C for each sample to be measured. The sealed samples are then cut to obtain 2.5x10 cm strips, whose unsealed ends is attached to a dynamometer, and the minimum seal temperature where the seal does not break when a 200 g load is applied is determined. This overlapped specimens temperature represents the seal initiation temperature (S.I.T.).

TABLE 1 - FRACTION A

| Example n. | 1 | 2 | 3 | 4 | 1c | 2c |
|---|---|---|---|---|---|---|
| Temperature °C | 60 | 60 | 60 | 60 | 60 | 60 |
| Pressure bar | 8.8 | 8.9 | 8.7 | 8.8 | 8.7 | 8.8 |
| Time min. | 120 | 80 | 120 | 60 | 120 | 90 |
| 1-butene$_{(gas\ phase)}$ % moles | 8.75 | 8.63 | 9.1 | 9.03 | 8.9 | 6.4 |
| $H_{2(gas\ phase)}$ % moles | 1.4 | 3.0 | 0.4 | 1.23 | 1.8 | 1.5 |
| Polymer % by weight | 50 | 45 | 52.1 | 28.8 | 61.5 | 65.1 |
| 1-butene % by weight | 6.85 | 6.66 | 7.68 | 7.67 | 7.27 | 5.06 |
| I.V. dl/g | 1.70 | 1.34 | 2.33 | 1.76 | 1.52 | 1.66 |
| Sol. xyl. % by weight | 1.0 | 1.7 | 1.4 | 1.0 | 1.3 | 1.3 |
| Melting point °C | 151.0 | 154.0 | 149.6 | 149.5 | 150.0 | 154.6 |

TABLE 2 - FRACTION B

| Example n. | 1 | 2 | 3 | 4 | 1c | 2c |
|---|---|---|---|---|---|---|
| Temperature °C | 60 | 60 | 60 | 60 | 60 | 60 |
| Pressure bar | 8.85 | 8.77 | 9.0 | 9.6 | 9.35 | 9.20 |
| Time min. | 190 | 180 | 100 | 270 | 120 | 120 |
| 1-butene$_{(gas\ phase)}$ % moles | 33.2 | 33.4 | 32.7 | 21.8 | 23.1 | 26.3 |
| $H_{2(gas\ phase)}$ % moles | 1.4 | 0.4 | 3.0 | 1.0 | 2.47 | 1.43 |
| Polymer % by weight | 50 | 55 | 47.9 | 71.2 | 38.5 | 34.9 |
| 1-butene % by weight | 30.3 | 28.49 | 26.72 | 21.22 | 22.37 | 26.67 |
| I.V. dl/g | 1.75 | 1.94 | 1.76 | 1.96 | 1.84 | 2.10 |

**TABLE 3 - FINAL COMPOSITION**

| Example n. | 1 | 2 | 3 | 4 | 1c | 2c |
|---|---|---|---|---|---|---|
| Yield $kg_{polymer}/g_{cat}$ | 4.1 | 4.7 | 4.0 | 6.0 | 3.3 | 4.14 |
| MIL g/10 min. | 5.4 | 7.3 | 2.9 | 3.3 | 2.7 | 5.6 |
| I.V. dl/g | 1.72 | 1.67 | 2.06 | 1.90 | 2.04 | 1.81 |
| 1-butene % by weight | 18.58 | 18.67 | 16.80 | 17.31 | 13.09 | 12.60 |
| Sol. Xyl. 25°C | 15.3 | 15.2 | 13.8 | 7.2 | 4.1 | 6.4 |
| Melting point °C | 146.4 | 148.3 | 146.2 | 141.4 | 145.5 | 154.7 |
| S.I.T. °C | 96 | 98 | 102 | 100 | 110 | 110 |
| Flexural Modulus MPa | 980 | 1150 | 1010 | 970 | 1050 | 1180 |
| Haze % | 31.6 | 39.2 | 32.3 | 17.5 | 35.3 | 27.9 |
| Appearance | spheres | spheres | spheres | spheres | spheres | spheres |
| %B · $C_4^B$ | 1500 | 1560 | 1280 | 1510 | 860 | 930 |

## Claims

1. A semicrystalline polyolefin composition comprising (by weight):

   A) 25-50% of a propene/$C_4$-$C_{10}$ α-olefin random copolymer (Fraction A), containing from 1 to 10% of a $C_4$-$C_{10}$ α-olefin,
   B) 50-75% of a propene/$C_4$-$C_{10}$ α-olefin random copolymer (Fraction B), containing from 15 to 40% of a $C_4$-$C_{10}$ α-olefin, same or different from the one present in Fraction A,

   wherein the percent by weight of Fraction B (%B), referred to the total composition, and the percent by weight of $C_4$-$C_{10}$ α-olefin in Fraction B ($C_4^B$) satisfy the relation $\%B \times C_4^B \geq 1200$, the amount of fraction soluble in xylene at 25°C is less than 16% by weight, the melting point is from 135 to 150°C and the heat sealing temperature is 90 to 105°C.

2. The composition of claim 1, wherein the $C_4$-$C_{10}$ α-olefins of Fractions A and B are the same.

3. The composition of claim 1, wherein the $C_4$-$C_{10}$ α-olefin is selected from the group consisting of 1-butene, 1-pentene, 1-hexene, 1-octene, and 4-methyl-1-pentene.

4. The composition of claim 1, wherein the percent of $C_4$-$C_{10}$ α-olefin in Fraction A is from 3 to 8% by weight.

5. The composition of claim 1, wherein the percent of $C_4$-$C_{10}$ α-olefin in Fraction B is from 20 to 30% by weight.

6. A process for the preparation of composition of claim 1, wherein the monomers are polymerized in the presence of stereospecific catalysts supported on active magnesium dihalides in active form, in at least two separate and sequential stages, where Fractions A and B are formed, and each stage is carried out in the presence of the polymer formed and the catalyst used in the immediately preceding stage.

7. The process of claim 6, wherein all the polymerization stages are carried out in gas phase.

8. The process of claim 6, wherein the first stage is carried out in liquid monomer, and the second in gas phase.

## Patentansprüche

1. Semikristalline Polyolefinzusammensetzung, umfassend (auf Gewicht bezogen):

   (A) 25-50% eines Propen/$C_4$-$C_{10}$-α-Olefin-Randomcopolymeren (Fraktion A), enthaltend 1 bis 10% eines $C_4$-$C_{10}$-α-Olefins,
   (B) 50-75% eines Propen/$C_4$-$C_{10}$-α-Olefin-Randomcopolymeren (Fraktion B), enthaltend 15 bis 40% eines $C_4$-$C_{10}$-α-Olefins, das identisch ist mit oder verschieden ist von dem in Fraktion A vorhandenen,

   worin der Gewichtsprozentanteil von Fraktion B (%B), bezogen auf die Gesamtzusammensetzung, und der Gewichtsprozentanteil des $C_4$-$C_{10}$-α-Olefins in Fraktion B ($C_4^B$) der Beziehung $\%B \times C_4^B \geq 1200$ genügen, die Menge der in Xylol bei 25 °C löslichen Fraktion geringer als 16 Gew.-% ist, der Schmelzpunkt 135 bis 150 °C beträgt und die Heißverschweißtemteratur 90 bis 105°c beträgt.

2. Zusammensetzung nach Anspruch 1, worin die $C_4$-$C_{10}$-α-Olefine der Fraktionen A und B die gleichen sind.

3. Zusammensetzung nach Anspruch 1, worin das $C_4$-$C_{10}$-α-Olefin unter 1-Buten, 1-Penten, 1-Hexen, 1-Octen und 4-Methyl-1-penten ausgewählt ist.

4. Zusammensetzung nach Anspruch 1, worin der Prozentanteil des $C_4$-$C_{10}$-α-Olefins in Fraktion A 3 bis 8 Gew.-% beträgt.

5. Zusammensetzung nach Anspruch 1, worin der Prozentanteil des $C_4$-$C_{10}$-α-Olefins in Fraktion B 20 bis 30 Gew.-% beträgt.

**6.** Verfahren zur Herstellung der Zusammensetzung gemäß Anspruch 1, worin die Monomeren in Anwesenheit von stereospezifischen Katalysatoren, trägergestützt auf aktiven Magnesiumdihalogeniden in aktiver Form, in zumindest zwei getrennten und aufeinanderfolgenden Stufen polymerisiert werden, wobei die Fraktionen A und B gebildet werden, und jede Stufe in Gegenwart des in der unmittelbar vorangegangenen Stufe gebildeten Polymeren und des dort verwendeten Katalysators durchgeführt wird.

**7.** Verfahren nach Anspruch 6, worin sämtliche Polymerisationsstufen in der Gasphase durchgeführt werden.

**8.** Verfahren nach Anspruch 6, worin die erste Stufe in flüssigem Monomeren und die zweite in der Gasphase durchgeführt werden.

**Revendications**

**1.** Une composition de polyoléfine semi-cristalline comprenant (en poids) :

A) de 25 à 50 % d'un copolymère statistique propène/α-oléfines en $C_4$-$C_{10}$ (fraction A), contenant de 1 à 10 % d'α-oléfines en $C_4$-$C_{10}$ ;
B) 50 à 75 % d'un copolymère statique propène/α-oléfines en $C_4$-$C_{10}$ (fraction B), contenant de 15 à 40 % d'α-oléfines en $C_4$-$C_{10}$, identique ou différent de celui qui est présent dans la fraction (A),

dans laquelle le pourcentage en poids de fraction (B) (% B) exprimé par rapport au poids total de la composition et le pourcentage en poids d'α-oléfines en $C_4$-$C_{10}$ dans la fraction (B) ($C_4^B$) satisfont la relation $\% B \times C_4^B \geq 1200$, la proportion de fraction soluble en xylène à 25°C est inférieure à 16 % en poids, le point de fusion est de 135 à 150°C et la température de thermosoudage est de 90 à 105°C.

**2.** La composition selon la revendication 1, dans laquelle les α-oléfines en $C_4$-$C_{10}$ des fractions (A) et (B) sont identiques.

**3.** La composition selon la revendication 1, dans laquelle l'α-oléfine en $C_4$-$C_{10}$ est choisie dans le groupe consistant en 1-butène, 1-pentène, 1-hexène, 1-octène et 4-méthyl-1-pentène.

**4.** La composition selon la revendication 1 dans laquelle le pourcentage en α-oléfines en $C_4$-$C_{10}$ de la fraction (A) est de 3 à 8 % en poids.

**5.** La composition selon la revendication 1, dans laquelle le pourcentage en α-oléfines en $C_4$-$C_{10}$ de la fraction (B) est de 20 à 30 % en poids.

**6.** Un procédé de préparation d'une composition selon la revendication 1, dans lequel les monomères sont polymérisés en présence de catalyseurs stéréo-spécifiques supportés sur des dihalogénures de magnésium actifs sous forme active, en au moins deux étapes distinctes et successives. où on forme les fractions (A) et (B), chaque étape étant effectuée en présence du polymère formé et du catalyseur utilisé dans l'étape immédiatement précédente.

**7.** Le procédé selon la revendication 6, dans lequel toutes les étapes de polymérisation sont effectuées en phase gazeuse.

**8.** Le procédé selon la revendication 6, dans lequel la première étape est effectuée dans le monomère liquide et la seconde étape est effectuée en phase gazeuse.